# EUROPÄISCHE PATENTSCHRIFT

(11) **EP 3 199 867 B1**
(45) Veröffentlichungstag und Bekanntmachung des Hinweises auf die Patenterteilung: **10.07.2019**
(21) Anmeldenummer: 17153071.0
(22) Anmeldetag: 25.01.2017
(51) Int. Cl.: F21S 8/04, F21V 5/04, F21V 7/00, F21V 8/00, F21S 8/06, F21S 6/00, F21Y 115/10

(54) **LEUCHTE MIT INDIREKTBELEUCHTUNG**
LAMP WITH INDIRECT LIGHTING
APPAREIL D'ÉCLAIRAGE INDIRECT

(30) Priorität: 26.01.2016 DE 102016101361; 08.03.2016 DE 102016104223
(43) Veröffentlichungstag der Anmeldung: 02.08.2017
(73) Patentinhaber: Siteco Beleuchtungstechnik GmbH, 83301 Traunreut (DE)
(72) Erfinder: Lukanow, Stephan, 82152 Krailling (DE)
(74) Vertreter: Schmidt, Steffen

(56) Entgegenhaltungen:
- DE-A1-102009 037 763
- US-A1- 2012 092 856
- US-A1- 2012 106 134
- US-A1- 2013 335 966
- US-A1- 2015 316 703
- US-A1- 2015 345 743

## Beschreibung

Die Erfindung betrifft eine Leuchte, welche auf einer zur Raumdecke gewandten Seite eine Beleuchtungseinrichtung aufweist, um eine Indirektbeleuchtung durch Lichtabgabe nach oben zur Raumdecke zu erzeugen.

Leuchten mit einer Einrichtung zur Erzeugung eines Indirektlichtanteils, welche von der Leuchte in Richtung einer Raumdecke abgegeben wird, werden insbesondere für die Beleuchtung von Büroräumen eingesetzt. Derartige Indirektbeleuchtungen sind häufig auch an abgehängten Deckenleuchten oder Stehleuchten vorhanden, welche gleichzeitig für eine Direktbeleuchtung sorgen. Allerdings stellt sich ein Problem, wenn der Abstand der Leuchte zu der Decke verhältnismäßig gering ist. Eine Indirektbeleuchtung, welche nur dadurch erzielt wird, dass Leuchtmittel an der Oberseite der Leuchte in Richtung zur Raumdecke abstrahlen, sind nicht in der Lage, eine größere Fläche der Raumdecke zu auszuleuchten.

US 2012/092856 A1 offenbart eine Leuchte gemäß dem Oberbegriff des Anspruchs 1.

Aufgabe der vorliegenden Erfindung ist es, eine Leuchte bereitzustellen, die eine verbesserte Lichtabstrahlung für die Indirektbeleuchtung erzielt.

Gelöst wird die Aufgabe durch die Leuchte nach Anspruch 1.

Eine Besonderheit der erfindungsgemäßen Leuchte ist, dass oberhalb der Leuchtmittel für den Indirektanteil, welche durch wenigstens eine LED gebildet sind, eine Freiformlinse angeordnet ist, welche die Lichtverteilung aufweitet. Gegenüber einer gewöhnlichen LED, die eine Lambert-Lichtverteilung erzeugt, sorgt die Freiformlinse durch eine Kombination von Lichtbrechung und Totalreflexion für eine breitere Lichtverteilung. Dadurch lässt sich mit einer Leuchte, die in einem verhältnismäßig geringen Abstand zur Decke angebracht ist, trotzdem eine große Fläche der Decke zur Erzeugung der Indirektbeleuchtung ausleuchten. Außerdem ist die Bauhöhe der Anordnung aus der LED und der Freiformlinse sehr gering, so dass sich die Anordnung gut auf der Oberseite der Leuchte unterbringen lässt.

Gemäß einer bevorzugten Ausführungsform weist die Freiformlinse eine erste gegenüber der Lichtquelle V-förmig angeordnete optische Fläche auf, welche in einem Winkel zu einer Lichteintrittsfläche und der LED so angeordnet ist, dass das Licht der LED wenigstens teilweise an der ersten optischen Fläche totalreflektiert wird und in einer Richtung zu einer Lichtaustrittsfläche abgegeben wird. Die Totalreflexion an der V-förmigen ersten optischen Fläche dient dazu, das Licht um einen verhältnismäßig großen Winkel verlustfrei umzulenken. Insbesondere kann in der Ausführungsform vorgesehen sein, dass die Lichtbündel, welche an der ersten optischen Fläche totalreflektiert werden, direkt an der Lichtaustrittsfläche austreten und sich außerhalb der Freiformlinse überkreuzen. Dadurch wird das Licht in einem Querschnittsebene, welche die optische Achse der LED enthält, über Kreuz in entgegengesetzter Richtungen abgelenkt, so dass die Lichtverteilung für die Indirektbeleuchtung verbreitert wird.

Erfindungsgemäß ist die Freiformlinse dafür eingerichtet, dass ein Teil des Lichtes, welches von der wenigstens einen LED in die Freiformlinse eintritt, an zwei gegenüberliegenden optischen Flächen mehrfach totalreflektiert wird und in einer Richtung senkrecht zu der optischen Achse der LED in der Freiformlinse in der Art eines Lichtleiters transportiert wird und durch wenigstens eine seitliche Lichtaustrittsfläche, vorzugsweise mehrere seitliche Lichtaustrittsflächen, ausgekoppelt wird. Die seitliche Umlenkung des Lichts unter Verwendung gegenüberliegender optischer Flächen hat den Vorteil, dass das Licht an einer zentralen Stellen in die Linse eingekoppelt werden kann und in eine Richtungen seitlich zur optischen Achse, d.h. in einer Richtung parallel zu der Raumdecke in der Leuchte transportiert wird, bevor es aus seitlichen Lichtaustrittsflächen austritt. Dadurch lässt sich ein Indirektlicht erzeugen, welches in einem flachen Winkel zur Raumdecke von der Freiformlinse abgegeben wird. Dieses Licht eignet sich daher dafür, die Raumdecke in einem großen Umfang um die Leuchte zur Erzeugung einer Indirektbeleuchtung auszuleuchten. Im Unterschied zu Leuchten mit einer Vielzahl von LEDs an der Oberfläche, die am Rand des Leuchtengehäuses angeordnet werden müssen, um das Licht in einem flachen Winkel zur Raumdecke abzugeben, kann die eine oder die mehreren LEDs gemäß der vorliegenden Ausführungsform zentral und mit einer optischen Achse senkrecht zur Raumdecke angeordnet sein. Trotzdem wird durch die Mehrfachreflexion das Licht nach dem Austritt aus den seitlichen Lichtaustrittsflächen in einem flachen Winkel zur Raumdecke abgegeben.

Insbesondere kann dabei vorgesehen sein, dass die gegenüberliegenden optischen Flächen planparallel sind. Diese Anordnung eignet sich dafür, das Licht über eine verhältnismäßig große Strecke von der zentralen optischen Achse der LED in Richtung zu den seitlichen Lichtaustrittsflächen zu transportieren.

Gemäß einer Weiterbildung der zuletzt genannten Ausführungsformen kann eine der gegenüberliegenden optischen Flächen in einem mittleren Bereich der Freiformlinse auch als Lichtaustrittsfläche dienen. Insbesondere können die Lichtbündel, die an der ersten optischen Fläche totalreflektiert werden, direkt aus der zur Raumdecke gewandten optischen Fläche der zwei gegenüberliegenden optischen Flächen austreten. Letztendlich kann die optische Fläche gleichzeitig als Fläche zur Totalreflexion und als optische Fläche zur Lichtbrechung dienen, abhängig davon, unter welchem Winkel die Lichtbündel innerhalb der Freiformlinse auf die betreffende optische Fläche auftreffen. Dadurch lässt sich mit einer verhältnismäßig einfach geformten Freiformlinse, die kostengünstig z.B. aus Kunststoff (insbesondere PMMA) hergestellt sein kann, ein verhältnismäßig komplizierter Strahlengang zur Umlenkung des Lichts realisieren.

Gemäß einer bevorzugten Ausführungsform weist die Freiformlinse eine gegenüber der LED umgekehrt V-förmige Lichteintrittsfläche auf. Diese Form der Lichteinkoppelfläche hat den Vorteil, dass das Licht der LED, welches in der Art einer Lambert-Verteilung in alle Richtungen abgegeben wird, nahezu verlustfrei in die Freiformlinse eingekoppelt werden kann, da die Winkel, mit das Licht der LED auf die Lichteinkoppelfläche auftrifft, etwa senkrecht sind. Eine störende Lichtreflexion bei der Einkopplung kann dadurch wirksam vermieden werden, ohne dass dazu eine besondere antireflektierende Beschichtung des transparenten Materials der Freiformlinse notwendig ist.

Gemäß einer Weiterbildung der vorhergehend genannten Ausführungsform kann die Lichteinkoppelfläche auch eine Erhebung in Richtung zu der Lichtquelle aufweisen, wobei die Erhebung in Richtung der optischen Achse der LED auf die LED weist. Durch diese Erhebung wird das Licht, welches parallel zur optischen Achse von der LED auf die Lichteinkoppelfläche auftrifft, bereits beim Eintreten in die Freiformlinse seitlich durch Lichtbrechung umgelenkt.

Gemäß einer bevorzugten Ausführungsform weist die Freiformlinse ferner Halteabschnitte auf, die dazu eingerichtet sind, mit komplementären Halteabschnitten an der Oberseite der Leuchte formschlüssig zusammenzuwirken, um die Freiformlinse gegenüber der Lichtquelle an der Leuchte zu fixieren. Dadurch sind keine weiteren Befestigungsmittel zur Montage der Freiformlinse notwendig. Insbesondere kann die Freiformlinse in der Art einer Schiene in nutenartige Vorsprünge an der Leuchtenoberseite oberhalb der wenigstens einen LED eingeschoben werden. Diese Anordnung ist nicht nur einfach zu montieren, sondern kann ferner auch leicht gereinigt werden. Dies ist insbesondere für die Beleuchtungseinrichtungen auf der Oberseite der Leuchte hilfreich, da diese im montierten Zustand der Leuchte schlecht zugänglich ist.

Gemäß einer bevorzugten Ausführungsform weist die Freiformlinse eine Höhe von weniger als 20 mm auf. Die niedrige Höhe lässt sich durch die optischen Flächen realisieren, die das Licht mittels Totalreflexion umlenken. Die geringe Bauhöhe der Freiformlinse hat Vorteile für Leuchten, die mit einem relativ kurzen Abstand zur Raumdecke montiert werden.

Gemäß einer bevorzugten Ausführungsform weist die Leuchte weitere Leuchtmittel auf einer den Leuchtmitteln für die Indirektbeleuchtung entgegengesetzten Seite eines Abschnitts der Leuchte auf. Diese Leuchten können daher Indirektbeleuchtung und Direktbeleuchtung erzeugen.

Die Indirektbeleuchtung, wie vorhergehend beschrieben, weist den Vorteil auf, dass die Leuchtmittel an einer zentralen Stelle mittig in der Leuchte angeordnet werden kann. Dadurch lassen sich die Leuchtmittel für die Direktbeleuchtung und für die Indirektbeleuchtung genau gegenüberliegenden an dem Leuchtengehäuse anordnen. Dies vereinfacht die elektrische Kontaktierung der Leuchtmittel. Ferner ermöglicht diese Bauform eine relativ kompakte Leuchte.

Gemäß einer bevorzugten Ausführungsform sind die Leuchtmittel für die Direktbeleuchtung und die Indirektbeleuchtung auf entgegengesetzten Seiten einer Wandung des Leuchtengehäuses angeordnet. Die Wandung kann insbesondere aus Metall gebildet sein und so für die notwendige Wärmeabfuhr der durch die Leuchtmittel erzeugten Wärme sorgen.

Weitere Merkmale und Vorteile der vorliegenden Erfindung werden aus der nachfolgenden Beschreibung bevorzugter Ausführungsformen, die in Bezug auf die beigefügten Figuren erläutert werden, deutlich. In den Figuren ist Folgendes dargestellt:
- Figur 1: zeigt einen Querschnitt durch eine Leuchte nach einer Ausführungsform der Erfindung.
- Figur 2: zeigt einen Abschnitt der Leuchte nach Figur 1 im Bereich einer Beleuchtungseinrichtung für einen Indirektanteil.
- Figur 3: zeigt den Querschnitt nach Figur 2 mit eingezeichneten Lichtstrahlen.
- Figur 4: zeigt einen Ausschnitt der Figur 3 im Randbereich der Freiformlinse.
- Figur 5: zeigt Lichtverteilungskurven in Polardarstellung des Indirektanteils der Leuchte in der C0/180-Ebene und der C90/270-Ebene.
- Figur 6: zeigt die Isolux-Kurven einer Lichtverteilung des Indirektanteils in einer 1 m von der Leuchte entfernten Fläche.

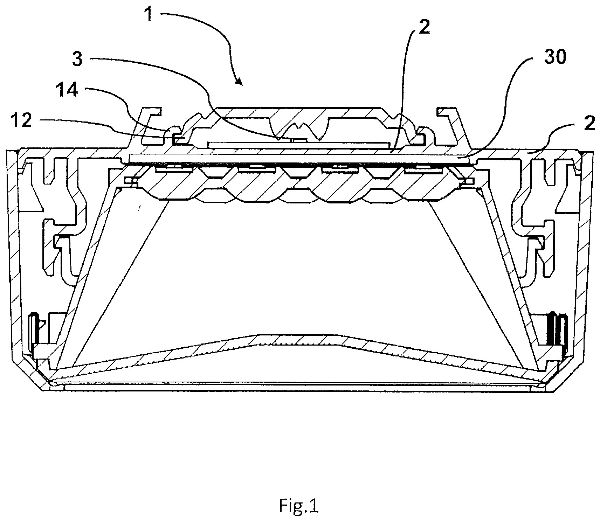

Bezug nehmend auf die Figur 1 wird eine Ausführungsform der vorliegenden Erfindung erläutert. Die Leuchte weist einen Gehäuseträger 2 auf, der z.B. als Aluminiumstrangpressprofil ausgebildet sein kann und eine Oberseite eines Leuchtengehäuses bildet. An dem Träger 2 sind gegenüberliegend zwei Platinen angebracht, die jeweils LEDs 3 und 30 aufweisen. Die Platine mit den LEDs 30 ist in dem Leuchtengehäuse angeordnet und weist mit den LEDs nach unten zur Erzeugung eines Direktlichtanteils. Die Platine mit der LED 3 ist auf der Oberseite des Geräteträgers 2 angebracht und weist mit der LED in Richtung nach oben zur Erzeugung eines Indirektlichtanteils.

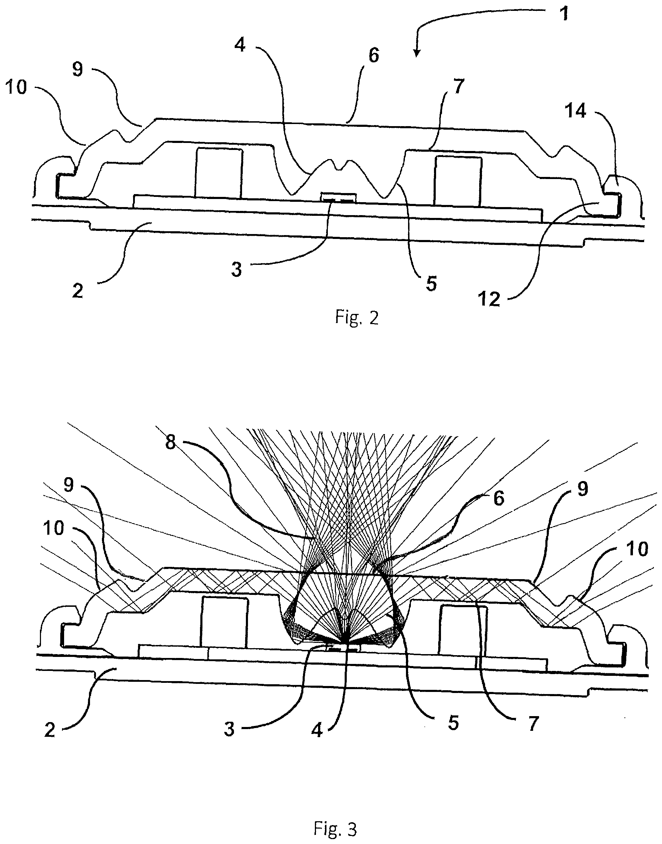

Oberhalb der LED 3 ist eine Freiformlinse 1 montiert. Bezug nehmend auf die Figuren 2 und 3 werden die Einzelheiten der Freiformlinse 1 erläutert.

Die Freiformlinse 1 weist eine etwa umgekehrt V-förmige Lichteintrittsfläche 4 auf, welche gegenüberliegend der Platine der LED 3 angeordnet ist. Wie in der Figur 3 dargestellt, tritt die Lichtstrahlung der LED 3 in die Lichteintrittsfläche 4 der Freiformlinse 1 ein. Das Strahlenbündel der LED 3 wird beim Eintritt in die Lichteintrittsfläche 4 gebrochen. Ein großer Teil der Strahlen trifft auf eine erste optische Fläche 5 der Freiformlinse 1 auf und wird daran totalreflektiert. Die erste optische Fläche 5 ist V-förmig angeordnet, während die Lichteintrittsfläche 4 umgekehrt V-förmig angeordnet ist. Durch die umgekehrt V-förmige Lichteintrittsfläche tritt ein Großteil der Lichtstrahlung der LED in die Freiformlinse ein, ohne reflektiert zu werden, weil das Licht überwiegend nahezu senkrecht auf die Fläche 4 auftrifft. Die erste optische Fläche 5 ist in einem solchen Winkel gegenüber dem einstrahlenden Lichtbündel angeordnet, dass der überwiegende Teil der Lichtstrahlung an der ersten optischen Fläche 5 totalreflektiert wird und nach oben in Richtung zur einer Lichtaustrittsfläche 6 umgelenkt wird. Die aus der Lichtaustrittsfläche 6 austretende Lichtstrahlung umfasst demnach zwei Teillichtbündel 8, die jeweils an einem Schenkel der V-förmigen ersten optischen Fläche 5 totalreflektiert wurden. Diese beiden Teillichtbündel 8 überkreuzen sich außerhalb der Freiformlinse 1, so dass sie in entgegengesetzte Richtungen abgegeben werden. Diese Teillichtbündel 8 divergieren ferner und bilden eine gleichmäßig aufgeweitete Lichtverteilung im Bereich oberhalb und seitlich der Leuchte.

Ein Teil der in die Lichteintrittsfläche 4 eintretenden Lichtstrahlung gelangt auch ohne Reflexion an der ersten optischen Fläche 5 zu der Lichtaustrittsfläche 6. Wie in der Figur 3 dargestellt ist, wird ein Teil der direkt auf die Lichtaustrittsfläche 6 auftreffenden Lichtstrahlung unter Brechung durch die Lichtaustrittsfläche transmittiert. Diese Lichtstrahlung weist einen größeren Ablenkwinkel als die Lichtstrahlung der zuvor beschriebenen sich kreuzenden Teillichtbündel 8 auf und trägt daher zu einer Lichtverteilung in größeren Winkeln, d.h. weiter entfernt von der Leuchte, bei.

Ein weiterer Teil der Lichtstrahlung, die durch die Lichteintrittsfläche 4 in die Freiformlinse 1 eintritt und direkt zu der gegenüberliegenden Lichtaustrittsfläche 6 gelangt, wird an der Lichtaustrittsfläche 6 totalreflektiert. Eine weitere Totalreflexion findet an einer der Lichtaustrittsfläche 6 gegenüberliegenden optischen Fläche 7 statt, so dass das Licht zwischen den optischen Flächen 6 und 7 mehrfach hin und her reflektiert wird und in der Art eines Lichtleiters seitlich, d.h. radial zur optischen Achse der LED 3 transportiert wird. Am jeweiligen Rand der Freiformlinse 1 tritt das in der Art eines Lichtleiters transportierte Licht durch zwei Lichtaustrittsflächen 9 und 10 aus. Dieses Licht weist einen verhältnismäßig großen Ablenkwinkel zur optischen Achse der LED 3 auf und trägt daher zur Beleuchtung der weiter entfernten Abschnitte der Raumdecke bei. Die beiden weiteren seitlichen Lichtaustrittsflächen 9 und 10 sind gegenüber der Vertikalen, welche der optischen Achse der LED 3 entspricht, so abgeschrägt, dass Ablagerungen von Staub im üblichen Maße keine Beeinträchtigung darstellen. Die Profilstufe zwischen den Lichtaustrittsflächen 9 und 10 ist so ausgelegt, dass der abgelagerte Staub den Lichtaustritt nicht blockiert sofern wenigstens die üblichen Reinigungszyklen eingehalten werden.

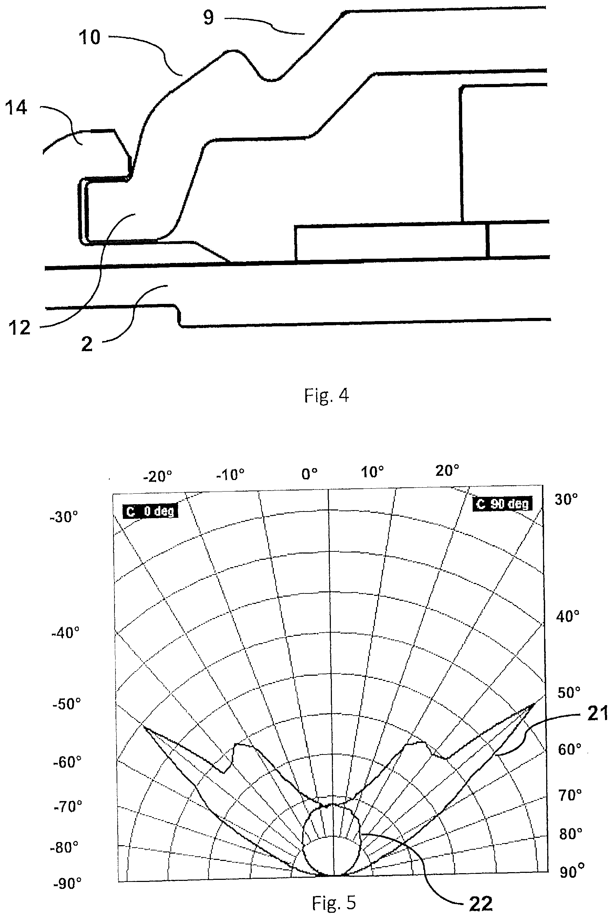

Die Figur 4 zeigt einen Abschnitt der Freiformlinse 1 am äußeren Rand mit den zwei Lichtaustrittsflächen 9 und 10. In der dargestellten Ausführungsform ist die Lichtaustrittsfläche 9 eben, während die Lichtaustrittsfläche 10 eine Krümmung aufweist. Die Krümmung hat den Effekt, dass das austretende Strahlenlichtbündel noch aufgeweitet wird. Generell können Ausführungsformen der vorliegenden Erfindung die Freiformlinse ebene, konkav oder konvex gekrümmte Lichtaustrittsflächen aufweisen, um die gewünschte Lichtverteilung weiter zu beeinflussen.

Im Randbereich der Freiformlinse 1 ist ferner ein Abschnitt 12 vorgesehen, der sich in der Art einer Stufe nach unten zu dem Leuchtengehäuse erstreckt. Der Geräteträger 2 des Leuchtengehäuses weist an dieser Stelle ferner einen Vorsprung 14 auf, welcher den Halteabschnitt 12 der Freiformlinse übergreift. Beispielsweise kann bei einer linearen Ausführung der Leuchte der Abschnitt 14 in der Art einer Schiene ausgeführt sein, in welchen die Halteabschnitte 12 der Freiformlinse der Länge nach eingeschoben werden. Auf diese Weise lässt sich die Freiformlinse in besonders einfacher Weise an dem Geräteträger 2 des Leuchtengehäuses montieren. Bei einer runden Ausführung der Freiformlinse können die Halteabschnitte 12 und 14 Unterbrechungen aufweisen, um sie ineinanderstecken und durch Drehen sichern zu können.

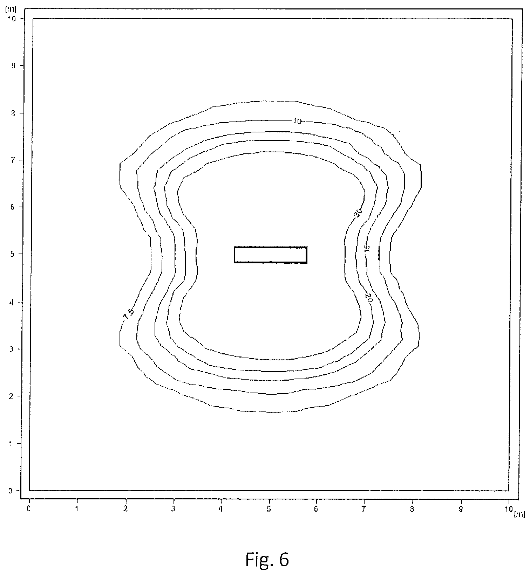

Die Figur 5 stellt zwei Lichtverteilungskurven des Indirektanteils der vorhergehend beschriebenen Leuchte dar. Die Lichtverteilungskurve 21 stellt die Lichtverteilung 21 in der C0/180-Ebene, in welchen die Leuchte in den Figuren 1 bis 4 gezeigt ist. Die Lichtverteilung 21 ist verhältnismäßig breit verteilt und weist zwei große Maxima bei ±50° und zwei kleinere Maxima bei ±35° auf. Die Lichtverteilung ist daher geeignet, um eine Zimmerdecke auch in verhältnismäßig großem Abstand zu der Leuchte gleichmäßig auszuleuchten. Eine entsprechende Isoluxkurve in einer 1 m entfernten Fläche zu der Leuchte ist in der Figur 6 dargestellt. In der C0/180-Ebene, welche einer senkrechten Linie in der Figur 6 entspricht, sind die Isoluxen relativ weit von der Leuchte entfernt. In der dazu senkrechten C90/270-Ebene ist die Lichtverteilung 22 demgegenüber viel schmäler und weist ein Maximum bei 0° auf. Die Isoluxkurven in der Figur 6 liegen in der C90/270-Ebene, welche in der Figur 6 einer waagrechten Linie durch die Leuchte entspricht, entsprechend näher an die Leuchte.

Vorhergehend wurde die Lichttechnik für die Indirektbeleuchtung der erfindungsgemäßen Leuchte beschrieben. Wie in der Figur 1 dargestellt ist, ist ferner eine Platine mit LEDs 30 auf der der Platine mit der LED 3 entgegengesetzten Seite des Geräteträgers 2 vorgesehen. Die Platine für den Direktanteil weist eine größere Anzahl von LEDs 30 auf, welche das Licht durch eine Vorsatzoptik nach unten abgeben. Die Leuchte weist ferner einen Reflektor und eine transparente Abdeckung für den Direktanteil auf. Weitere Details zu dem Direktanteil sind in der deutschen Patentanmeldung 10 2016 101 345.5 mit dem Titel "Leuchte mit pyramidenförmiger oder kegelförmiger Abdeckung" der Anmelder Osram GmbH & Siteco Beleuchtungstechnik GmbH, eingereicht am 26. Januar 2016, beschrieben, auf welche hierzu verwiesen wird.

Zahlreiche Modifikationen an den vorhergehend beschriebenen Ausführungsformen können im Rahmen der Erfindung, welche durch die Ansprüche definiert ist, vorgenommen werden. Insbesondere kann die Leuchte auch eine runde Querschnittsform aufweisen. In diesem Fall weist die Platine nur eine zentrale LED 3 in der Mitte oder eine Gruppe von zentral angeordneten LEDs in der Mitte auf. Die Leuchte kann auch einen quadratischen oder rechteckigen Querschnitt aufweisen. Bei einem eckigen Querschnitt sind eine Reihe von LEDs 3, d.h. senkrecht zu der Bildebene der Figuren 1 bis 4, auf der Platine vorgesehen. Bei mehreren LEDs 3 können die LEDs auch unterschiedliche Farben aufweisen. Insbesondere kann ferner vorgesehen sein, dass die LEDs unterschiedlich elektronisch angesteuert werden können. Dadurch lassen sich beliebige Mischfarben erzeugen. Insbesondere können warmweiße und kaltweiße Fabtöne miteinander gemischt werden oder die LEDs können die Farben rot, grün, blau zur Erzeugung eines weiten Farbspektrums aufweisen.

### BEZUGSZEICHENLISTE

- 1: Freiformlinse
- 2: Geräteträger des Gehäuses
- 3: LED für Indirektanteil
- 4: umgekehrt V-förmige Lichteintrittsfläche
- 5: erste V-förmige optische Fläche
- 6: Lichtaustrittsfläche
- 7: optische Fläche
- 8: kreuzende Lichtbündel
- 9: Lichtaustrittsfläche
- 10: Lichtaustrittsfläche
- 12: Halteabschnitt
- 14: komplementärer Halteabschnitt am Leuchtengehäuse
- 21: LVK des Indirektanteils in der C0/180-Ebene
- 22: LVK des Indirektanteils in der C90/270-Ebene
- 30: LED für Direktanteil

## Patentansprüche

1. Leuchte mit einer Lichtquelle, die wenigstens eine LED (3) umfasst, zur Erzeugung einer Indirektbeleuchtung, wobei die Lichtquelle auf einer Seite der Leuchte vorgesehen ist, welche im montierten Zustand der Leuchte in Richtung zur Raumdecke weist,
wobei über der Lichtquelle eine Freiformlinse (1) angeordnet ist und die Freiformlinse (1) optische Flächen aufweist, welche dazu angeordnet sind, durch eine Kombination von Lichtbrechung und Totalreflektion die Lichtverteilung der Indirektbeleuchtung gegenüber der Lichtverteilung, welche die LED (3) selbst aufweist, zu verbreitern, **dadurch gekennzeichnet, dass** die Freiformlinse (1) dazu eingerichtet ist, dass ein Teil des Lichts, welches von der wenigstens einen LED (3) in die Freiformlinse eintritt, an zwei gegenüberliegenden optischen Flächen (6, 7) mehrfach totalreflektiert wird und in einer Richtung senkrecht zur optischen Achse der LED (3) in der Freiformlinse (1) in der Art eines Lichtleiters transportiert wird und durch wenigstens eine seitliche Lichtaustrittsfläche (9; 10) ausgekoppelt wird.

2. Leuchte nach Anspruch 1, wobei die Freiformlinse eine erste gegenüber der Lichtquelle V-förmig angeordnete optische Fläche (5) aufweist, welche in einem Winkel zu der LED (3) und einer Lichteintrittsfläche (4) so angeordnet ist, dass Licht der LED (3) wenigstes teilweise von der ersten optischen Fläche totalreflektiert wird und in Richtung zu einer Lichtaustrittsfläche (6) abgegeben wird.

3. Leuchte nach Anspruch 2, wobei Lichtbündel (8), welche an der ersten optischen Fläche (5) totalreflektiert werden, direkt an der Lichtaustrittsfläche (6) austreten und außerhalb der Freiformlinse (1) einander überkreuzen.

4. Leuchte nach einem der vorhergehenden Ansprüche, wobei die gegenüberliegenden optischen Flächen (6, 7) planparallel sind.

5. Leuchte nach einem der vorhergehenden Ansprüche, wobei eine der gegenüberliegenden optischen Flächen (6) gleichzeitig in einem mittleren Bereich der Freiformlinse (1) als Lichtaustrittsfläche (6) dient.

6. Leuchte nach einem der vorhergehenden Ansprüche, wobei die Freiformlinse (1) eine gegenüber der LED (3) umgekehrt V-förmige Lichteintrittsfläche (4) aufweist.

7. Leuchte nach Anspruch 6, wobei die Lichteintrittsfläche (4) an einem der wenigstens einen Lichtquelle gegenüberliegenden Abschnitt eine Erhebung aufweist, die in Richtung auf die optische Achse der LED (3) zeigt.

8. Leuchte nach einem der vorhergehenden Ansprüche, wobei die Freiformlinse (1) Halteabschnitte aufweist, die dazu eingerichtet sind, mit komplementären Halteabschnitten (14) an einer Oberseite der Leuchte formschlüssig zusammenzuwirken, um die Freiformlinse (1) gegenüberliegend der Lichtquelle an der Leuchte festzulegen.

9. Leuchte nach einem der vorhergehenden Ansprüche, wobei die Freiformlinse (1) eine Höhe von weniger als 20 mm aufweist.

10. Leuchte nach einem der vorhergehenden Ansprüche, wobei die Leuchte weitere Leuchtmittel (30) auf einer der dem Leuchtmittel für die Indirektbeleuchtung entgegengesetzten Seite der Leuchte aufweist, wobei die weiteren Leuchtmittel (30) Licht für eine Direktbeleuchtung abgeben.

11. Leuchte nach einem der vorhergehenden Ansprüche, wobei die Leuchtmittel für Direkt- und Indirektbeleuchtung auf entgegengesetzten Seiten eines Tragprofils (2) eines Leuchtengehäuses angeordnet sind.

12. Leuchte nach Anspruch 11, wobei das Tragprofil (2) eine Stärke von 1 mm bis 6 mm aufweist und aus Metall, insbesondere Aluminium, gebildet ist.

## Claims

1. Luminaire having a light source which comprises at least one LED (3) for producing indirect lighting, the light source being provided on one side of the luminaire which, in the mounted state of the luminaire, points in the direction of the ceiling of the room,
wherein a free-form lens (1) is arranged above the light source and the free-form lens (1) has optical surfaces which are arranged to widen the light distribution of the indirect illumination by a combination of light refraction and total reflection with respect to the light distribution which the LED (3) itself has,
**characterized in that** the free-form lens (1) is arranged so that a part of the light, which enters the free-form lens from the at least one LED (3), is totally reflected several times on two opposite optical surfaces (6, 7) and is transported in the free-form lens (1) in the manner of a light guide in a direction perpendicular to the optical axis of the LED (3) and is coupled out by at least one lateral light exit surface (9; 10).

2. Luminaire according to claim 1, wherein the free-form lens has a first optical surface (5) which is arranged in a V-shape opposite the light source and is arranged at an angle to the LED (3) and a light entry surface (4) in such a way that light from the LED (3) is at least partially totally reflected by the first optical surface and is emitted in the direction of a light exit surface (6).

3. Luminaire according to claim 2, wherein light beams (8), which are totally reflected at the first optical surface (5), exit directly at the light exit surface (6) and cross one another outside the free-form lens (1).

4. Luminaire according to one of the preceding claims, the opposite optical surfaces (6, 7) being plane-parallel.

5. Luminaire according to one of the preceding claims, wherein one of the opposing optical surfaces (6) simultaneously serves as a light exit surface (6) in a central region of the free-form lens (1).

6. Luminaire according to one of the preceding claims, wherein the free-form lens (1) has a light entry surface (4) which is V-shaped in reverse relation to the LED (3).

7. Luminaire according to claim 6, wherein the light entry surface (4) has, at a portion opposite the at least one light source, an elevation which points in the direction of the optical axis of the LED (3).

8. Luminaire according to one of the preceding claims, the free-form lens (1) comprising retaining portions adapted to positively cooperate with complementary retaining portions (14) on an upper surface of the luminaire to secure the free-form lens (1) to the luminaire opposite the light source.

9. Luminaire according to any of the preceding claims, the free-form lens (1) having a height of less than 20 mm.

10. Luminaire according to one of the preceding claims, the luminaire having further lighting means (30) on a side of the luminaire opposite the lighting means for indirect illumination, the further lighting means (30) emitting light for direct illumination.

11. Luminaire according to one of the preceding claims, the lighting means for direct and indirect lighting being arranged on opposite sides of a supporting profile (2) of a luminaire housing.

12. Luminaire according to claim 11, the supporting profile (2) having a thickness of 1 mm to 6 mm and being formed from metal, in particular aluminum.

## Revendications

1. Luminaire avec une source de lumière, qui comprend au moins une LED (3), pour la production d'un éclairage indirect, la source de lumière étant disposée sur un côté du luminaire qui est orienté, lorsque le luminaire est monté, en direction du plafond de la pièce,
une lentille à forme libre (1) étant disposée au-dessus de la source de lumière et la lentille à forme libre (1) comprenant des surfaces optiques qui sont disposées de façon à élargir, grâce à une combinaison de réfraction et de réflexion totale, la répartition de la lumière de l'éclairage indirect par rapport à la répartition de la lumière assurée par la LED (3) elle-même, **caractérisé en ce que** la lentille à forme libre (1) est conçue de façon à ce qu'une partie de la lumière qui entre de l'au moins une LED (3) dans la lentille à forme libre, soit totalement réfléchie plusieurs fois au niveau deux surfaces optiques opposées (6, 7) et soit transportée, dans une direction perpendiculaire à l'axe optique de la LED (3) dans la lentille à forme libre (1) comme dans une fibre optique et soit découplée à travers au moins une surface de sortie de lumière latérale (9 ; 10).

2. Luminaire selon la revendication 1, la lentille à forme libre comprenant une première surface optique (5) disposée en forme de V en face de la source de lumière, qui est disposée à un angle par rapport à la LED (3) et à une surface d'entrée de lumière (4) de façon à ce que la lumière de la LED (3) soit réfléchie totalement au moins partiellement par la première surface optique et soit émise en direction d'une surface de sortie de lumière (6).

3. Luminaire selon la revendication 2, les faisceaux lumineux (8), qui sont réfléchis totalement au niveau de la première surface optique (5) sortent directement au niveau de la surface de sortie de lumière (6) et se croisent à l'extérieur de la lentille à forme libre (1).

4. Luminaire selon l'une des revendications précédentes, les surfaces optiques opposées (6, 7) étant parallèles.

5. Luminaire selon l'une des revendications précédentes, une des surfaces optiques opposées (6) servant en même temps, dans une zone centrale de la lentille à forme libre (1), de surface de sortie de lumière (6).

6. Luminaire selon l'une des revendications précédentes, la lentille à forme libre (1) comprenant une surface d'entrée de lumière (4) en forme de V inversé en face de la LED (3).

7. Luminaire selon la revendication 6, la surface d'entrée de lumière (4) comprenant, au niveau d'une portion opposée à l'au moins une source de lumière, un bossage qui est orienté en direction de l'axe optique de la LED (3).

8. Luminaire selon l'une des revendications précédentes, la lentille à forme libre (1) comprenant des portions de maintien, qui sont conçues pour interagir par complémentarité de forme avec des portions de maintien complémentaires (14) au niveau d'un côté supérieur du luminaire, afin de fixer la lentille à forme libre (1) en face de la source de lumière sur le luminaire.

9. Luminaire selon l'une des revendications précédentes, la lentille à forme libre (1) présentant une hauteur inférieure à 20 mm.

10. Luminaire selon l'une des revendications précédentes, le luminaire comprenant des moyens d'éclairage supplémentaires (30) sur un côté du luminaire opposé au moyen d'éclairage pour l'éclairage indirect, les moyens d'éclairage supplémentaires (30) émettant une lumière pour un éclairage direct.

11. Luminaire selon l'une des revendications précédentes, les moyens d'éclairage pour l'éclairage direct et indirect sont disposés sur des côtés opposés d'un profilé porteur (2) d'un boîtier de luminaire.

12. Luminaire selon la revendication 11, le profilé porteur (2) présentant une épaisseur de 1 mm à 6 mm et étant constitué de métal, plus particulièrement d'aluminium.
